# EUROPÄISCHE PATENTSCHRIFT

(11) **EP 2 166 886 B1**
(45) Veröffentlichungstag und Bekanntmachung des Hinweises auf die Patenterteilung: **28.03.2012**
(21) Anmeldenummer: 08735195.3
(22) Anmeldetag: 12.04.2008
(51) Int. Cl.: A23L 3/16, A23B 9/02, A23L 3/015

(54) **VERFAHREN ZUR OBERFLÄCHEN-PASTEURISATION UND -STERILISATION VON LEBENSMITTELSTÜCKEN**
PROCESS FOR SURFACE PASTEURIZATION AND STERILIZATION OF FOOD PIECES
PROCÉDÉ DE PASTEURISATION ET DE STÉRILISATION EN SURFACE DE MORCEAUX D'ALIMENTS

(30) Priorität: 02.07.2007 DE 102007030660; 19.03.2008 DE 102008015062
(43) Veröffentlichungstag der Anmeldung: 31.03.2010
(73) Patentinhaber: Bühler Barth AG, 71691 Freiberg (DE)
(72) Erfinder: PERREN, Rainer, CH-6022 Grosswangen (CH); FISCHER, Jürgen, 75038 Oberderdingen (DE)
(74) Vertreter: Hepp Wenger Ryffel AG
(86) Internationale Anmeldenummer: PCT/EP2008/002907
(87) Internationale Veröffentlichungsnummer: WO 2009/003546

(56) Entgegenhaltungen:
- WO-A-03/037109
- WO-A-03/043665
- WO-A-2004/066710
- DE-A1- 3 902 679
- FR-A- 2 680 637
- GB-A- 2 396 546
- US-A- 3 721 527
- CLARK J P: "Thermal processing of solids" FOOD TECHNOLOGY, INSTITUTE OF FOOD TECHNOLOGISTS, CHICAGO, IL, US, Bd. 61, Nr. 4, 1. Januar 2007 (2007-01-01), Seiten 79-81, XP009100266 ISSN: 0015-6639 in der Anmeldung erwähnt
- KOZEMPEL M ET AL: "The vacuum/steam/vacuum process" FOOD TECHNOLOGY, INSTITUTE OF FOOD TECHNOLOGISTS, CHICAGO, IL, US, Bd. 57, Nr. 12, 1. Januar 2003 (2003-01-01), Seiten 30-33, XP009100267 ISSN: 0015-6639 in der Anmeldung erwähnt

## Beschreibung

Die Erfindung betrifft ein Verfahren zur Oberflächen-Pasteurisation oder Oberflächen-Sterilisation von partikulären Lebensmittelprodukten, insbesondere von Ölsamen, wie Mandeln, Haselnüssen, Pecannüssen, Walnüssen, sowie Erdnüssen, Kleien, Ceralien, Kaffee und Kakao.

Agronomische Produkte und Lebensmittel sind naturgemäß mit harmlosen und potentiell pathogenen Mikroorganismen belastet. In den meisten Fällen werden agronomische Produkte frisch verarbeitet, oder sie werden mit geeigneten, technologischen Methoden haltbar gemacht. Zu den Haltbarmachungsverfahren, die industriell eingesetzt werden, zählen unter anderem die Sterilisation oder Pasteurisation mit Hitze, Bestrahlung mit ionisierenden Strahlen oder auch die Begasung mit lethal wirkenden Gasen. Vor allem die beiden letztgenannten Verfahren sind nur begrenzt einsetzbar, da der Gesetzgeber den Einsatz dieser Verfahren streng reglementiert.

In den letzten Jahren wurde von mehreren Fällen einer Kontamination von rohen Mandeln mit Salmonellen berichtet. Um die Sicherheit von Mandelprodukten zu erhöhen, haben die amerikanischen Behörden verfügt, dass die gesamte Mandelernte ab Herbst 2007 pasteurisiert oder in ausreichendem Maß hitzebehandelt werden muss. Die Pasteurisation von Mandeln und anderen Ölsamen stellt besondere Ansprüche an die einzusetzenden Verfahren. Der Wassergehalt der Mandeln darf durch die und während der Behandlung nicht in wesentlichem Ausmaß erhöht werden, da sowohl die Lagerfähigkeit als auch die Integrität der Mandeln dadurch beeinträchtigt werden. Zudem neigen rohe Mandeln dazu, das Samenhäutchen zu verlieren, was als schwerwiegender Qualitätsverlust betrachtet werden muss.

Aus diesem Grund wird hier ein Hitze-Inaktivierungsverfahren vorgestellt, das geeignet ist, die mikrobielle Oberflächenkontamination von Mandeln, Ölsamen und von anderen stückigen Lebensmitteln mit mittlerem oder niedrigem Wassergehalt maßgeblich zu vermindern, ohne dass die qualitativen Eigenschaften der Produkte (Wassergehalt, Aussehen, Aroma und Geschmack, Textur) verändert werden. Nach Massgabe der US-Behörden kann im Falle von rohen Mandeln bei einer Verminderung der Mikroflora um 5 log-Einheiten von einer Pasteurisation gesprochen werden.

Eine effiziente Hitzeinaktivierung von Mikroorganismen wird in einer Atmosphäre von erhöhter Wasseraktivität erzielt. Durch eine trockene Erhitzung hingegen werden Mikroorganismen nur in geringem Maß inaktiviert. Aus diesem Grund setzen im industriellen Maßstab eingesetzte Hitzepasteurisations- und -sterilisationsverfahren einen hohen Wassergehalt der Produkte voraus. Dies betrifft insbesondere Sterilisations- und Pasteurisationsverfahren, die in der Konserven- und Getränkeindustrie oder zur Haltbarmachung von Milch und Milchprodukten eingesetzt werden.

Problematisch ist eine Pasteurisation oder Sterilisation vor allem bei Produktstücken, die über eine niedrige Wasseraktivität von weniger als 0,8 verfügen und die im Falle einer Hitzebehandlung nicht einem höheren Wassergehalt ausgesetzt werden können. Dies trifft insbesondere auf Mandeln, Nüsse und andere Ölsamen, aber auch auf Gewürze und andere partikuläre Lebensmittelprodukte zu. Insbesondere ist die Behandlung von rohen, nicht blanchierten Mandeln schwierig, da durch eine Hitzebehandlung in feuchter Atmosphäre einerseits Aroma- und Farbveränderungen schnell voranschreiten und andererseits ein Ablösen der Samenhaut unbedingt vermieden werden muss, wie es beispielsweise durch die Anwendung von Wasser provoziert wird. Somit kann die Pasteurisierung von rohen Mandeln als Beispiel eines anspruchsvollen Pasteurisationsguts betrachtet werden.

Zur Hitzeinaktivierung von trockenen Gewürzen werden beispielsweise Verfahren eingesetzt, in denen die Gewürze in einer Druckkammer mit gesättigtem oder überhitztem Dampf während kurzer Zeit beaufschlagt werden und der Druck anschließend entspannt wird (Gysel, 1990). Die plötzliche Druckentspannung führt zum Ablösen von Mikroorganismen von der Oberfläche und zum Zerbersten von Bakterienzellen. Das Zusammenwirken von feuchter Hitze und dem mechanisch wirkenden Entspannungsvorgang führt zu einer gezielten und schnellen Inaktivierung von Mikroorganismen.

Verfahren, die nach diesem Prinzip arbeiten, eignen sich indes nicht zur Oberflächenpasteurisation von Mandeln und anderen Ölsamen. Einerseits wird der Wassergehalt durch die Anwendung von gesättigtem oder überhitztem Dampf bei einem Druck von >1 bar (Temperaturen über 100° C) aufgrund der auftretenden Kondensation stark erhöht. Diese erhebliche Wasseraufnahme, wie sie aus einer derartigen Behandlung herrührt, macht eine nachfolgende Trocknung notwendig und führt zu einer Verminderung der Qualität und der Lagerfähigkeit der Produkte. Andererseits wird die Integrität der Produkte, insbesondere aufgrund der Aufnahme eines grossen Anteils an Oberflächenwasser und aufgrund der auftretenden, mechanischen Kräfte während der Entspannung geschädigt. Im Speziellen lösen sich im Falle von rohen Mandeln oder anderen, nicht blanchierten Ölsamen die Häutchen ab, was der Qualität abträglich ist.

Das CFP Power Pasteurization System der Firma Ventilex (West Chester, OH) ist auf der Website www.nutpasteurization.net beschrieben und wurde speziell zur Pasteurisation von Mandeln entwickelt. Dieses Verfahren besteht aus einer kontinuierlich fördernden Fluidbett-Kammer, in die die Mandeln eingebracht und unter Überdruck mit überhitztem Dampf behandelt werden. Anschließend werden die Nüsse in einer weiteren, ebenfalls kontinuierlich fördernden Kammer mit warmer Luft getrocknet und dann gekühlt. Das Ventilex-Verfahren erhöht aufgrund der enormen Kondensation während der Behandlung den Wassergehalt der Mandeln in erheblichem Maß von etwa 5 % auf bis 10 %, was die Qualität der pasteurisierten Mandeln in wesentlichem Ausmaß beeinträchtigt und in der nachfolgenden Heißlufttrocknung zum Ablösen von Hautteilen führt. Zudem führen die hohen Behandlungstemperaturen zu unerwünschten Farb- und Aromaveränderungen der Mandeln.

Im JSP-1 Jet Stream® Almond Surface Pasteurization System der Firma FMC Technologies (Sandusky, OH) werden Mandeln mit Dampf auf eine vorgegebene Temperatur erhitzt; anschließend werden die Mandeln dann in feuchter Luft pasteurisiert. Die Pasteurisation findet in einer kontinuierlichen Kammer in feuchter Luft statt, wobei die Taupunkttemperatur der Luft wesentlich höher als die Temperatur der eingebrachten Mandeln liegt (Gunawardena und Weng, 2006). Die feuchte Luft kondensiert auf der Mandeloberfläche, was zusammen mit der Hitzeeinwirkung zur gewünschten Inaktivierung von Mikroorganismen führt. Auch dieses Verfahren führt zu einer Wasserkondensation in hohem Ausmaß, weshalb das Wasser im Anschluss an die Pasteurisation mit Heißluft abgetrocknet werden muss. Durch die hohe Wasseraufnahme während der Aufheizung mit Dampf und Pasteurisation in feuchter Luft sowie durch die nachfolgende Trocknung wird die Mandelqualität folglich stark beeinträchtigt.

Clark (2007) beschrieb weitere Modifikationen von Dampfbehandlungsverfahren. Das Safesteril-Verfahren der Firma ETIA, F-Compiegne (Antonini, 1993) ist ein kontinuierliches Verfahren zur Behandlung von stückigen Gütern und Pulvern mit Dampf. Dabei wird ein Produktstrom mit einer beheizten Schnecke durch eine geschlossene Kammer transportiert und darin mit Dampf beaufschlagt. Da diese Behandlung bei Normaldruck stattfindet, kondensiert Dampf solange aus, bis das Gut eine Temperatur von 100° C erreicht hat. Die Beheizung des Produkts über die Schnecke soll dabei eine übermäßige Kondensation von Dampf auf dem Produkt verhindern, was schließlich vom Wärmeeintrag über die beheizte Schnecke abhängt. Aufgrund der mechanischen Einwirkung durch den Schneckentransport, vor allem aber aufgrund des ausgeprägten Wassereintrags ist dieses Verfahren zur Hitzebehandlung von rohen Mandeln und Ölsamen nicht geeignet.

Weitere Verfahren wenden eine Sattdampfatmosphäre unter reduziertem Druck an. Kozempel et al. (2003) beschreiben ein Vakuum-Dampf-Vakuum-Verfahren zur Pasteurisation von Lebensmittel-Oberflächen. Dabei wird das partikuläre Gut alternierend einem Vakuum unterworfen und mit Dampf beaufschlagt. Durch die abwechselnde Anwendung von Vakuum und Dampf soll sichergestellt werden, dass die Kondensation alle Porenöffnungen und Vertiefungen der Oberfläche erreicht.

Ein daraus abgeleitetes Verfahren stellt das Verfahren der Firma Steam Lab Systems (CH-Bottmingen) dar (Blaha, 2003). In diesem Verfahren wird das Produkt wie beschrieben einem Zyklus an Vakuum und Bedampfung ausgesetzt. Die Einleitung von Wasserdampf nach einem Vakuumschritt erfolgt solange, bis ein atmosphärischer Druck erreicht ist. Aufgrund der variierenden Druckverhältnisse muss davon ausgegangen werden, dass Wasserdampf bis zur Einstellung von Normaldruckbedingungen kondensiert, was wiederum zu einer relevanten Aufnahme von Wasser führt. Zudem sind die Temperaturverhältnisse, wie sie während des Prozessablaufs auf der Oberfläche herrschen, ungenügend definiert, was wiederum der Sicherheit des Prozesses abträglich ist.

Somit haben alle bekannten und hier aufgeführten Pasteurisationsverfahren für Mandeln oder andere Güterstücke damit gemein,
- dass die Behandlung in feuchter Atmosphäre bei Normal- oder Überdruck-Bedingungen bzw. im Falle der Vakuumverfahren bis zur Erstellung von Normaldruckbedingungen durchgeführt wird; damit kann davon ausgegangen werden, dass bei vollständiger Erstellung eines Gleichgewichts die Oberflächentemperatur 100° C oder mehr beträgt; damit laufen Reaktionen, die die Produktqualität negativ beeinflussen, sehr schnell ab;
- dass sie aufgrund des absichtlichen Wärmeeintrags durch Kondensation zu einer maßgeblichen Erhöhung des Wassergehalts von weit mehr als 2 % führen; eine (vorübergehende) Erhöhung des Wassergehalts in besagtem Ausmaß ist der Qualität der Pasteurisationsprodukte sehr abträglich, weil Kocharomen entwickelt werden und Oberflächen-Strukturen, wie beispielsweise die Häutchen von Mandeln, desintegriert und zerstört werden;
- dass aufgrund der hohen Wasseraufnahme eine Heißluft-Trocknung notwendig ist; während einer Trocknung in heißer Luft bei hohen Temperaturen laufen degenerative Veränderungen wie Bräunungsreaktionen ab, woraus relevante Qualitätseinbußen und ein wesentlicher Verlust an Authentizität der Produkte resultiert;
- dass die Pasteurisationsbedingungen ungenügend reproduzierbar sind, da erst nach dem Erreichen der Gleichgewichtstemperatur (unter Normaldruckbedingungen 100° C) die Oberflächentemperatur konstant bleibt; die Abwesenheit von konstanten Druckbedingungen führt zu ungenügend genau definierten Pasteurisationsbedingungen auf einer Produktoberfläche.

Es ist daher Aufgabe der Erfindung ein Verfahren der eingangs erwähnten Art zu schaffen, bei dem die Wasseraufnahme und die qualitativen Veränderungen der Lebensmittelprodukte minimiert und die Pasteurisations- oder Sterilisationsbedingungen optimiert sind.

Dies wird nach der Erfindung dadurch erreicht, dass die Lebensmittelprodukte vorgewärmt eingesetzt werden, wobei die Produkttemperatur wenige Grad unterhalb der Verdampfungstemperatur des Pasteurisations- oder Sterilisationssystem gewählt wird, dass die Vorwärmtemperatur der Lebensmittelprodukte niedriger als die Sattdampftemperatur vorzugsweise wenige Grade unterhalb der Sattdampftemperatur bei vorgegebenem Druck gewählt wird, dass die Behandlung in feuchter, luftfreier Atmosphäre vorgenommen wird, wobei die Pasteurisation bei Temperaturen zwischen 55 und 99° C bei einem niedrigen Pasteurisationsdruck oder die Sterilisation bei Temperaturen zwischen 100° C und 140° C bei einem höheren Sterilisationsdruck durchgeführt wird, dass die Wärmebehandlung während 1 bis 30 min durchgeführt wird und dass das Kondenswasser von der Oberfläche der Lebensmittelprodukte durch eine anschließende Vakuumtrocknung bei weiter reduziertem Druck entfernt wird.

Das neue Verfahren besteht aus drei Schritten:
1) Vorheizen der Lebensmittelprodukte,
2) Pasteurisation oder Sterilisation in einer reinen Dampfatmosphäre, wobei die Oberflächentemperatur der Verdampfungstemperatur beim eingestellten Systemdruck entspricht und
3) Abtrocknung von Oberflächen-Kondenswasser unter Vakuum.

Damit auch alle andere partikulären Lebensmittelprodukte, wie Nüsse, Ölsamen, Körner, Gewürze und dgl. optimal pasteurisiert oder sterilisiert werden können, sind folgende Grundsätze zu berücksichtigen:
1. Zur Verminderung der Qualitätsverlustrate muss die Oberflächen-Pasteurisations-oder Sterilisationstemperatur optimal gewählt und eingestellt werden. Durch die Anpassung des Systemdrucks kann die Verdampfungstemperatur und damit die Kondensationstemperatur gezielt und reproduzierbar eingestellt werden. Der Systemdruck kann im Bereich von 0,15 - 4,0 bar konstant gehalten werden, womit Pasteurisationstemperaturen von 55 - 99° C und Sterilisationstemperaturen von 100° C bis 140° C realisiert werden können.
2. Da die Wasseraufnahme und die anschließende Abtrocknung maßgeblich zur Qualitätsverminderung der Lebensmittelprodukte beitragen, wird eine unnötige oder übermäßige Aufnahme an Wasser vermieden. Dies wird erreicht, indem die Lebensmittelprodukte gezielt 0 - 8° C unter die Verdampfungstemperatur vorgewärmt werden. Damit kann die zur Erwärmung notwendige Wasseraufnahme auf weniger als 0,5 % beschränkt werden, was eine anschließende Heißlufttrocknung überflüssig macht.
3. Eine oberflächlich vorhandene kleine Restmenge an Wasser kann durch die Verminderung des Systemdrucks in kurzer Zeit entfernt werden. Durch die Verdampfung von Oberflächenwasser werden die Lebensmittelprodukte zudem unverzüglich gekühlt, so dass die Hitzeeinwirkung schnell abgebrochen werden kann.

Die Grundsätze werden durch die in den Unteransprüchen detaillierten Merkmale befolgt, in dem bei den drei Verfahrensschritten darauf geachtet wird.

### 1. Vorwärmer

Die Vorwärmung der Lebensmittelprodukte findet vorzugsweise in einer Apparatur statt, in der die Lebensmittelprodukte schnell auf die beabsichtigte Temperatur aufgewärmt werden, um ein vorzeitiges Austragen von Wasser zu verhindern. Beispielsweise kann die Vorwärmung in einer kontinuierlichen Infrarot-Trommel, mit Heißluft oder mit Mikrowellen stattfinden. Das Verfahren schließt auch eine Vorwärmung mit anderen Energieübertragungsmöglichkeiten nicht aus. Der Vorwärmschritt dient der Konditionierung der Lebensmittelprodukte und trägt höchstens unwesentlich zur Inaktivierung von Mikroorganismen auf der Gutoberfläche bei. Die Vorwärmtemperatur wird derart gewählt, dass in der nachfolgenden Dampfbehandlung die Verdampfungstemperatur 0-8° C höher als die Vorwärmtemperatur ist. Damit kann eine übermäßige Kondensation von Wasserdampf auf der Produktoberfläche und eine übermäßige Wasseraufnahme der Lebensmittelprodukte während der nachfolgenden Dampfbehandlung vermieden werden. Die Vorwärmtemperatur kann somit im Bereich von 50 - 144° C liegen. Der Bereich von 55 - 99° C ist vorzugsweise für die Pasteurisation und der Bereich von 100 - 140° C für die Sterilisation wählbar. Für die Pasteurisation von Mandeln liegt die Vorwärmtemperatur vorzugsweise zwischen 70° C und 90° C.

### 2. Pasteurisation in Dampfatmosphäre

Die Hitzeinaktivierung (Pasteurisation oder Sterilisation) findet bei Temperaturen im Bereich zwischen 50 - 140° C statt. Bei Behandlungen unter 100° C wird üblicherweise nur eine Pasteurisation erreicht, während für eine Sterilisation (vollständige Inaktivierung auch von thermostabilen Endosporen) Temperaturen bis zu 144° C erreicht werden müssen. Die Behandlungstemperatur wird dabei durch den im System herrschenden oder eingestellten Dampfdruck definiert. Bei Behandlungstemperaturen unter 100° C wird der Systemdruck geringer, bei Behandlungstemperaturen über 100° C größer als der Atmosphärendruck sein.

Systemdrücke unterhalb Atmosphärendruck werden realisiert, indem der Druck in der Behandlungskammer mit einer Vakuumpumpe reduziert wird. Sobald der eingestellte Systemdruck unterschritten wird, öffnet das Dampfzufuhrventil und die Dampfzufuhr wird gestartet. Die Dampfzufuhr erfolgt über ein Regelventil, das den Systemdruck in der Behandlungskammer konstant hält. Die Behandlung von Mandeln findet beispielsweise bei einem absoluten Druck von 0.1 - 0.95 bar, vorzugsweise bei 0.2 - 0.8 bar, statt.

Nach der Befüllung liegt die Guttemperatur 0 - 8° C unterhalb der Verdampfungstemperatur des Systems. Durch die Kondensation geringer Mengen an Wasser steigt die Guttemperatur schnell auf die Verdampfungstemperatur an. Dann kann Wasser nicht mehr auf der Produktoberfläche kondensieren; das System befindet sich im Gleichgewicht. In Abhängigkeit der Sattdampftemperatur muss die Zeitdauer (1 - 30 min) der Hitzeeinwirkung derart gewählt werden, dass eine ausreichende Inaktivierung der Mikroorganismen erreicht wird.

### 3. Entfernung von Oberflächen-Wasser

Nach Ablauf der Behandlung wird die Dampfzufuhr abgestellt, während die Vakuumpumpe weiterläuft. Durch die weitere Verminderung des Systemdrucks auf 0.15 - 0.01 bar (Absolutdruck) kann die durch die Temperaturangleichung aufgenommene Wassermenge dann während einer kurzen Dauer von 2 - 20 min wieder abgetrocknet werden, so dass die pasteurisierten sterilisierten Lebensmittelprodukte keine Zunahme des Wassergehalts aufweisen.

Die Erfindung wird nun anhand eines Ausführungsbeispiels näher erläutert. Es zeigen:
- Fig. 1: eine Vorrichtung zur Obertlächen-Pasteurisation von Lebensmittelstücken nach dem CCP-Verfahren gemäß der Erfindung und
- Fig. 2: Überlebenskurve und log-Reduktion von *Enterococcus faecium* auf Mandeln, pasteurisiert mit dem CCP-Verfahren bei 81,4° C (Systemdruck 0,5 bar)

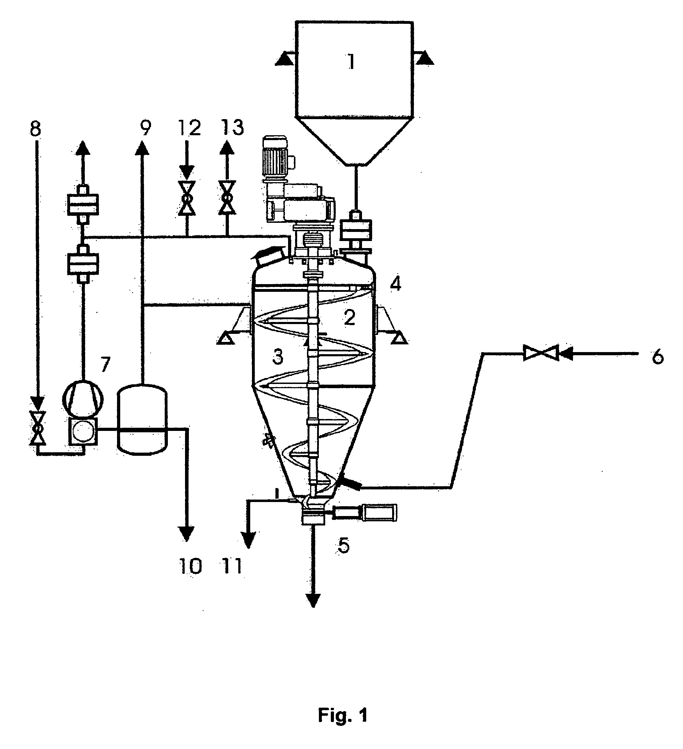

Das hier beschriebene Verfahren wird beispielsweise in einer Vorrichtung durchgeführt, wie sie in Fig. 1 dargestellt ist. Das mit einem geeigneten Verfahren auf eine vorgegebene Temperatur vorgewärmte Lebensmittelprodukt wird in einem Vorbehälter 1 vorgelegt. Durch Öffnen einer Klappe 4 wird das Lebensmittelprodukt in eine Druckkammer 2 gefüllt. Die Druckkammer 2 ist mit einem Doppelmantel versehen und der Mantel wird mit Dampf auf einer vorgewählten, den gewählten Bedingungen entsprechenden Temperatur gehalten. Nachdem der befüllte Druckbehälter druckdicht verschlossen ist, wird der Druck über eine Vakuumpumpe 7 vermindert. Wenn der vorgewählte Druck erreicht ist, wird ein Dampfventil 6 geöffnet. Der Dampfeintrag wird über ein Regelventil derart reguliert, dass der Druck in der Kammer konstant bleibt und der Vorgabe entspricht. Die Pasteurisation/Sterilisation dauert je nach gewähltem Druck bzw. nach gewählter Temperatur abhängig vom Produkt 1 - 30 min. Nach Abschluss der Pasteurisations-/Sterilisationsbehandlung wird das Dampfventil 6 verschlossen, und der Druck im Behälter wird auf 0,15 - 0,01 bar vermindert. Nach weiteren 2 - 20 min ist die Vakuumtrocknung abgeschlossen. Der Behälterdruck wird durch ein Druckausgleichsventil wieder an den Atmosphärendruck angeglichen. Dann wird eine Austragsöffnung 5 geöffnet, und das Lebensmittelprodukt wird entleert. Gegebenenfalls kann die Entleerung des Lebensmittelprodukts durch das Einschalten einer Mischwendel 3 unterstützt werden. Gängige Verfahrensparameter für Mandeln, Nüsse und Ölsamen sind in Tabelle 1 dargestellt.

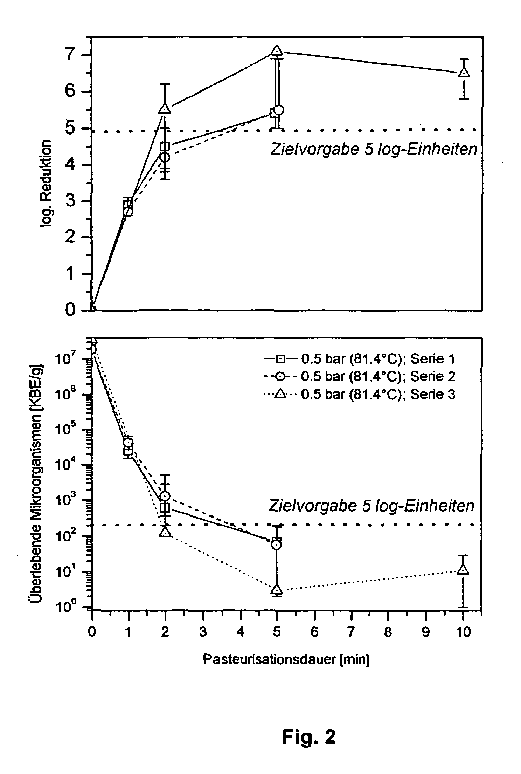

Unter geeigneten Verhältnissen ergibt sich mit diesem Verfahren eine minimale Wasseraufnahme auf der Oberfläche, die je nach gewählten Pasteurisations-/Sterilisationsbedingungen weniger als 0,5 % betragen kann. Trotzdem bildet sich während der Behandlung in der Grenzschicht um die Lebensmittelprodukte eine feuchte Atmosphäre aus. Damit kann gewährleistet werden, dass die Behandlung in ausreichend feuchter Atmosphäre nahe einer Wasseraktivität von 1,0 erfolgt, so dass eine ausreichende Inaktivierung von vegetativen Mikroorganismen und von Endosporen bei geeigneten Bedingungen auf der Produktoberfläche erfolgt (Fig. 2). Mit diesem Verfahren bleibt die native Qualität der Lebensmittelprodukte im besonderen bei einer Pasteurisation erhalten. Weder werden Aroma- oder Farbveränderungen induziert, noch wird bei optimalen Parametern (s. Tabelle 1) ein Ablösen von Häutchen auf Mandeln beobachtet.

Das hier beschriebene Pasteurisations- und Sterilisationsverfahren eignet sich auch zur thermischen Behandlung von anderen Ölsamen, wie Haselnüssen, Pecannüssen, Walnüssen, aber auch von Erdnüssen, Kleien, Cerealien, Kaffee, Kakao. Auch zur Behandlung von pulverförmigen Gütern ist dieses Verfahren geeignet, da die geringe Benetzung und Wasseraufnahme nicht zur Verklumpung von Pulverbestandteilen führt.

**Tabelle 1**

| Verfahrensparameter für die Oberflächenpasteurisation von rohen, mit *Enterococcus faecium* NRRL-B2354 inokulierten Mandeln. Die Ausgangskontamination an *E. faecium* betrug 2*10⁷KBE/g. | | | | | |
|---|---|---|---|---|---|
| Vorwärmtemperatu | Abs. Pasteurisationsdruck | Verdampfungstemperatur/Kondensationstemperatur | Einwirkzeit | Vakuum-Trocknung | Erzielte log-Verminderung |
| °C | bar | °C | Minuten | Minuten | |
| 80 | 0.5 | 81.5 | 2 | 5 | 5.5 |
| 80 | 0.5 | 81.5 | 5 | 5 | 7.4 |
| 80 | 0.5 | 81.5 | 10 | 5 | 6.6 |
| 90 | 0.5 | 81.5 | 2 | 5 | 5.3 |
| 70 | 0.5 | 81.5 | 10 | 5 | 7.9 |

### Literaturliste

G. Antonini, O. Lepez, P. Sajet, D. LaPlace, 1993, "Method and device for reducing or eliminating the microbial flora in an agri-foodstuff in the divided solid state", FR 2680637.
J. Blaha, 2003, "Verfahren zur Entkeimung von Produkten", WO 03/037109 A1, 8.5.2003.
J.- P. Clark, 2007, "Thermal Processing of solids", Food Technology 61 (04), 79 -81
R. M. Gunawardena, Z. Weng, 2006, "Dry food pasteurization apparatus and method", US 2006 040029.
M. M. Gysel, 1990, "Die Entkeimung von pflanzlichen Trockenprodukten mit Sattdampf', Dissertation ETH Nr. 9203, Eidgenössische Technische Hochschule ETH, Zürich.
M. Kozempel, N. Goldberg and J.C. Craig, 2003, "The vacuum/steam/vacuum process", Food Technology 57 (12), 30-33.

## Patentansprüche

1. Verfahren zur Oberflächen-Pasteurisation oder Oberflächen-Sterilisation von partikulären Lebensmittelprodukten, insbesondere von Ölsamen, wie Mandeln, Haselnüssen, Pecannüssen, Walnüssen, sowie Erdnüssen, Kleien, Ceralien, Kaffee, Kakao und,
**dadurch gekennzeichnet,**
**dass** die Lebensmittelprodukte vorgewärmt eingesetzt werden, wobei die Produkttemperatur wenige Grad unterhalb der Verdampfungstemperatur des Pasteurisations- oder Sterilisationssystems gewählt wird, dass die Vorwärmtemperatur der Lebensmittelprodukte niedriger als die Sattdampftemperatur vorzugsweise wenige Grade unterhalb der Sattdampftemperatur bei vorgegebenem Druck gewählt wird, dass die Behandlung in feuchter, luftfreier Atmosphäre vorgenommen wird, wobei die Pasteurisation bei Temperaturen zwischen 55 und 99° C bei einem niedrigen Pasteurisationsdruck oder die Sterilisation bei Temperaturen zwischen 100° C und 140° C bei einem höheren Sterilisationsdruck durchgeführt wird, dass die Wärmebehandlung während 1 bis 30 min durchgeführt wird und dass das Kondenswasser von der Oberfläche der Lebensmittelprodukte durch eine anschließende Vakuumtrocknung bei weiter reduziertem Druck entfernt wird.

2. Verfahren nach Anspruch 1,
**dadurch gekennzeichnet,**
**dass** die Produkttemperatur 0° C bis 8° C unterhalb der Verdampfungstemperatur des Pasteurisations- oder Sterilisationssystem gewählt wird.

3. Verfahren nach Anspruch 1,
**dadurch gekennzeichnet, dass** die Temperaturdifferenz zwischen der Vorwärmtemperatur der Lebensmittelprodukte und der Sattdampftemperatur bei gegebenem Druck vorzugsweise 0° C bis 8° C gewählt wird.

## Claims

1. A method for the surface pasteurization or surface sterilization of pieces of food products, in particular, oleaginous seeds, such as almonds, hazelnuts, pecans, walnuts, as well as peanuts, bran, cereal, coffee and cocoa,
**characterized in that**
the food products are employed pre-warmed, and the product temperature lies a few degrees below the evaporation temperature of pasteurization or sterilization systems, that the pre-warming temperature of the food products is selected to be lower than the saturation temperature, preferably a few degrees below the saturated steam temperature at a present pressure, that treatment is performed in a moist atmosphere free of air, wherein pasteurization is performed at temperatures between 55 and 99°C at a low pasteurization pressure, or sterilization at temperatures between 100°C and 140°C at a higher sterilization pressure, that heat treatment is performed in the course of 1 to 30 mins, and that condensation water is removed from the surface of the food products by means of subsequent vacuum drying under further reduced pressure.

2. The method in accordance with claim 1,
**characterized in that**
the product temperature is selected to lie between 0°C to 8°C below the evaporation temperature of the pasteurization or sterilization system.

3. The method in accordance with claim 1,
**characterized in that** the temperature difference between the pre-warming temperature of the food products and the saturated steam temperature at a given pressure is preferably selected to be 0°C to 8°C.

## Revendications

1. Procédé de pasteurisation en surface ou de stérilisation en surface de produits alimentaires particulaires, notamment de graines oléagineuses, telles que les amandes, les noisettes, les noix de pécan, les noix, ainsi que les cacahuètes, les sons, les céréales, le café et le cacao, **caractérisé en ce que** les produits alimentaires sont utilisés préchauffés, la température des produits étant choisi quelques degrés en dessous de la température d'évaporation du système de pasteurisation ou de stérilisation, **en ce que** la température de préchauffage des produits alimentaires est choisie inférieure à la température de la vapeur saturée, de préférence quelques degrés en dessous de la température de la vapeur saturée, à une pression donnée, **en ce que** le traitement est réalisé dans une atmosphère humide, exempte d'air, la pasteurisation étant réalisée à des températures comprises entre 55 et 99°C à une pression de pasteurisation faible ou la stérilisation étant réalisée à des températures comprises entre 100°C et 140°C à une pression de stérilisation plus élevée, **en ce que** le traitement thermique est réalisé pendant 1 à 30 min, et **en ce que** l'eau condensée est éliminée de la surface des produits alimentaires par un séchage sous vide ultérieur à une pression davantage réduite.

2. Procédé selon la revendication 1, **caractérisé en ce que** la température des produits est choisie dans la plage entre 0 °C et 8 °C en dessous de la température d'évaporation du système de pasteurisation ou de stérilisation.

3. Procédé selon la revendication 1, **caractérisé en ce que** la différence de température entre la température de préchauffage des produites alimentaires et la température de la vapeur saturée à une pression donnée est de préférence choisie dans la plage entre 0 °C et 8°C.
